# EUROPÄISCHE PATENTSCHRIFT

(11) **EP 4 487 060 B1**
(45) Veröffentlichungstag und Bekanntmachung des Hinweises auf die Patenterteilung: **21.01.2026**
(21) Anmeldenummer: 23706022.3
(22) Anmeldetag: 20.02.2023
(51) Int. Cl.: F24C 7/08

(54) **BESTIMMEN EINER VOLUMENGRÖSSE VON GARGUT**
DETERMINING A VOLUME SIZE OF FOOD
DÉTERMINATION D'UNE TAILLE DE VOLUME D'ALIMENT

(30) Priorität: 04.03.2022 EP 22382201
(43) Veröffentlichungstag der Anmeldung: 08.01.2025
(73) Patentinhaber: BSH Hausgeräte GmbH, 81739 München (DE)
(72) Erfinder: BENDER, Tim, 76137 Karlsruhe (DE); RITUERTO SIN, Alejandro, 50008 Zaragoza (ES); BLANCO ABAD, Belen, 50012 Zaragoza (ES); FELDMANN, Kerstin, 75015 Bretten (DE); WAGNER, Benjamin, 75015 Bretten (DE)
(86) Internationale Anmeldenummer: PCT/EP2023/054145
(87) Internationale Veröffentlichungsnummer: WO 2023/165827

(56) Entgegenhaltungen:
- DE-A1- 102019 107 859

## Beschreibung

Die Erfindung betrifft ein Verfahren zum Bestimmen einer Volumengröße, insbesondere Volumenänderung, von in einem Behandlungsraum eines Haushaltsgargeräts behandeltem Gargut, bei dem in zeitlicher Abfolge Bilder aus dem Behandlungsraum aufgenommen werden, in einem Bild der Bildfolge zu dem Gargut gehörige Bildpunkte identifiziert werden, mindestens eine das Volumen des Garguts betreffende Größe berechnet wird und dann, wenn die mindestens eine berechnete Größe mindestens ein vorgegebenes Kriterium erfüllt, durch das Haushaltsgargerät mindestens ein die Behandlung des Garguts beeinflussender Betriebsparameter des Haushaltsgargeräts variiert wird. Die Erfindung betrifft auch ein Haushaltsgargerät, aufweisend einen Behandlungsraum, der zum Wärmebehandeln von darin eingebrachtem Gargut eingerichtet ist, mindestens eine Kamera zum Aufnehmen von Bildern aus dem Behandlungsraum und eine Datenverarbeitungseinrichtung, die dazu eingerichtet ist, in einem Bild einer Abfolge von Bildern zu dem Gargut gehörige Bildpunkte zu identifizieren, aus den Bildpunkten mindestens eine das Volumen des Garguts betreffende Größe zu berechnen und dann, wenn die mindestens eine berechnete Größe mindestens ein vorgegebenes Kriterium erfüllt, mindestens einen die Behandlung des Garguts beeinflussenden Betriebsparameter des Haushaltsgargeräts zu variieren. Die Erfindung ist insbesondere vorteilhaft anwendbar auf das Backen von Teiglingen, insbesondere Brotteig.

DE 10 2019 213 638 A1 offenbart ein Gargerät, insbesondere Haushalts-Gargerät, zum Garen eines Garguts, mit einem beheizbaren Garraum und einer Steuerungsvorrichtung zum Durchführen zumindest eines Backprogramms zum Zubereiten des Garguts aus einem Ausgangsteig, und mit einer in dem Garraum angeordneten Erfassungseinrichtung zum Erfassen eines optischen Sensorsignals des Garguts, wobei die Steuerungsvorrichtung zum Durchführen des Backprogramms in Abhängigkeit des erfassten optischen Sensorsignals des Garguts eingerichtet ist. Die Steuerungsvorrichtung kann zum Ermitteln eines Volumens des Garguts in Abhängigkeit des erfassten optischen Sensorsignals und zum Durchführen des Backprogramms in Abhängigkeit des ermittelten Volumens eingerichtet sein. Die Steuerungsvorrichtung kann eine Auswerteeinheit umfassen, die beispielsweise eine Bildanalyse durchführt, um das Volumen des Garguts zu ermitteln. Insbesondere vergleicht die Steuerungsvorrichtung im Verlauf des Backprogramms zu unterschiedlichen Zeitpunkten ermittelte Volumenwerte und schließt so auf eine Veränderung des Volumens. Auf diese Weise lässt sich ein Endzeitpunkt einer Teigruhe oder einer Stückgare analytisch ermitteln. Ein Endzeitpunkt kann in Abhängigkeit eines Schwellwerts für das Volumen ermittelt werden. Der Schwellwert kann dabei ein prozentualer Wert bezogen auf ein Anfangsvolumen, ein absoluter Wert, insbesondere ein berechneter Zielwert, für das Volumen sein. Der Schwellwert kann sich dabei auch auf einen Wert der Volumenänderung pro Zeiteinheit beziehen, und insbesondere ein Volumenmaximum darstellen. Die Steuerungsvorrichtung kann zum Ermitteln einer Form des Garguts in Abhängigkeit des erfassten optischen Sensorsignals und zum Durchführen des Backprogramms in Abhängigkeit der ermittelten Form eingerichtet sein. Dabei werden vorzugsweise auch geometrische Parameter, wie ein Durchmesser, eine Höhe und/oder eine Kantenlänge ermittelt.

DE 10 2019 107 859 A1 offenbart ein Verfahren zum Betreiben eines Gargeräts mit einem Garbereich und mit einer Behandlungseinrichtung zur Zubereitung von Gargut. Das Gargut wird im Garbereich während des Garprozesses überwacht. Dabei wird mittels einer Kameraeinrichtung ein Maß für die Größe des Garguts während des Garprozesses wiederholt bestimmt. Daraus wird ein Maß für die Größenänderung des Garguts über die Zeit ermittelt. Das Gargut wird abhängig von dem Maß für die Größenänderung wenigstens einer Gargutgruppe zugeordnet. Aus einer Flächenausdehnung der dem Gargut zugeordneten Bildelemente kann wenigstens näherungsweise eine Grundfläche des Garguts bestimmt werden und aus einer Differenz der Abstände der dem Gargut zugeordneten Bildelemente und der dem Gargut benachbarten, aber nicht zugeordneten Bildelemente kann wenigstens näherungsweise eine Höhe des Garguts bestimmt werden und aus der Grundfläche und der Höhe kann wenigstens näherungsweise ein Volumen des Garguts bestimmt werden und eine Volumenänderung über die Zeit kann als Maß für die Größenänderung des Garguts herangezogen werden. Dabei kann fortwährend am Start und während des Garens ein zeitlicher Verlauf eines Schätzwertes des Gargutvolumens dokumentiert werden. Eine Elektronik kann den zeitlichen Verlauf des Schätzwertes des Gargutvolumens im Wirkzusammenhang mit dem gewählten Garprogramm fortwährend analysieren und einen Eingriff in die Regelung des Garprogramms vornehmen. Dies kann z. B. durch Garraumtemperatur verändern, Assistenz im Dialog mit dem Benutzer gegen Ende der Garzeit, eigenständiges Beenden des Garvorgangs erfolgen. Die Elektronik greift dann aufgrund dieser Analyse bzw. Informationen in den Garprozess ein, zum Beispiel durch Abschalten der Beheizung und anderer Energiezufuhr und ggfs. durch Warmhalten oder (Schnell-)Abkühlen.

DE 10 2019 107 812 A1 offenbart ein Verfahren zum Betreiben eines Gargeräts mit einem Garbereich zur Zubereitung von Gargut, wobei das Gargut im Garbereich während des Garprozesses überwacht wird und wobei dazu mittels einer Kameraeinrichtung über die Zeit Bilder des Garbereichs erfasst werden, wobei die Bilder jeweils aus einer Vielzahl von Bildelementen bestehen und mittels einer Verarbeitungseinrichtung ausgewertet werden. Dabei werden sich über die Zeit verändernde Bildelemente identifiziert und als zu dem Gargut gehörend zugeordnet, um eine Unterscheidung von den von außerhalb des Garguts stammenden Bildelementen zu ermöglichen. Dabei wird ausgenutzt, dass Bildelemente, die Gargut enthalten, sich völlig anders als Bildelemente verhalten, die den Garbereich mit Garraumwänden, Gefäßen u. ä. enthalten. Diese Andersartigkeit bezieht sich nicht nur auf die Veränderung durch Bräunen und Verfärben, sondern z. B. auch auf Abstände durch Volumenveränderung oder Veränderungen der Oberflächentemperatur. Die mittels der Kameraeinrichtung erfassten Bilder können räumliche Bildinformationen aus dem Garbereich enthalten, wobei zur Identifizierung der sich über die Zeit verändernden Bildelemente wenigstens eine zeitliche Veränderung der räumlichen Bildinformationen, vorzugsweise eine Abstandsänderung zur Kameraeinrichtung, ausgewertet wird.

DE 10 2019 212 364 A1 offenbart ein Verfahren zum Betreiben eines Haushalts-Gargeräts mit einem Garraum und mindestens einer Kamera, die zum Aufnehmen von bildpunktbasierten Bildern aus dem Garraum eingerichtet ist, bei dem (a) mittels der mindestens einen Kamera mindestens ein Bild aus dem Garraum aufgenommen wird und (b) das Bild unter Ausschluss der Helligkeitswerte seiner zugehörigen Bildpunkte ausgewertet wird.

Es ist die **Aufgabe** der vorliegenden Erfindung, die Nachteile des Standes der Technik zumindest teilweise zu überwinden und insbesondere eine einfach umsetzbare und robuste Möglichkeit bereitzustellen, eine ein Volumen eines wärmebehandelten Garguts betreffende Größe aus einer Bildfolge zu berechnen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Bestimmen einer Volumengröße von in einem Behandlungsraum eines Haushaltsgargeräts behandeltem Gargut, bei dem
- in zeitlicher Abfolge Bilder aus dem Behandlungsraum aufgenommen werden,
- in einem, insbesondere ersten, Bild der Bildfolge zu dem Gargut gehörige Bildpunkte identifiziert werden,
- für folgende Bilder eine Bewegungsrichtung und eine Bewegungsgeschwindigkeit der Bildpunkte mittels der Methode des optischen Flusses, insbesondere der Methode des dichten optischen Fluss, berechnet werden,
- die Bewegungsrichtungen der zuvor identifizierten Bildpunkte in Klassen für unterschiedliche Bewegungsrichtungen klassifiziert werden,
- die Zahlen der Bildpunkte, welche in die jeweiligen Klassen fallen, gezählt werden,
- aus den Zahlen mindestens eine das Volumen des Garguts betreffende Größe berechnet wird und
- dann, wenn die mindestens eine berechnete Größe mindestens ein vorgegebenes Kriterium erfüllt, durch das Haushaltsgargerät mindestens ein die Behandlung des Garguts beeinflussender Betriebsparameter des Haushaltsgargeräts variiert wird.

Dieses Verfahren ergibt den Vorteil, dass die das Volumen des wärmebehandelten Garguts betreffende Größe unabhängig von der Größe des Garguts, der Positionierung des Garguts und der Art des Gargutbehälters zuverlässig bestimmt werden kann.

Das Haushaltsgargerät kann beispielsweise ein Backofen, ein Dampfbehandlungsgerät, ein Mikrowellengerät, eine Küchenmaschine oder eine beliebige Kombination daraus sein, z.B. ein Backofen mit Dampfbehandlungs-, insbesondere Dampfgar-, Funktionalität. Der Behandlungsraum kann auch als Garraum bezeichnet werden, und zwar auch dann, wenn das Gargut darin nicht gegart wird, sondern z.B. behandelt wird, in dem es bei Raumtemperatur befeuchtet wird.

Das Verfahren ist besonders vorteilhaft, wenn das Gargut zumindest während eines zeitlichen Abschnitts seiner Behandlung eine merkliche Volumenänderung erfährt. Es ist eine Weiterbildung, dass das Gargut ein Teigling ist, z.B. aus Brotteig usw. besteht.

Die zeitliche Abfolge kann beispielsweise die Aufnahme von Bildern in einem Abstand von mehreren Sekunden bis Minuten umfassen, beispielsweise alle 5 s, 10 s, 30 s, 1 min, 2 min, o.ä.

Dass Bilder aus dem Behandlungsraum aufgenommen werden, umfasst insbesondere, dass auch in dem Behandlungsraum befindliches Gargut auf den Bildern abgebildet ist.

Es ist eine Weiterbildung, dass zumindest ein Teil der Bilder mittels einer Kamera des Haushaltsgargeräts aufgenommen wird. Die Kamera kann beispielsweise im Bereich einer Decke, einer Seitenwand oder einer Rückwand der Wandung des Behandlungsraus (auch als Muffel bezeichenbar) oder an einer eine Beschickungsöffnung des Behandlungsraums verschließenden Tür angeordnet sein. Es ist eine Weiterbildung, dass die Kamera schräg in den Behandlungsraum gerichtet ist, was vorteilhaft ist, um eine Bewegung des Garguts in vertikaler Richtung zu erfassen. Die Kamera kann auch als Garraumkamera bezeichnet werden. Die Kamera ist insbesondere eine bildpunktbasierte Digitalkamera, speziell eine digitale Farbkamera.

Das Haushaltsgargerät kann ein oder mehrere Garraumkameras aufweisen. Das Verfahren kann anhand der Bilder nur einer Kamera oder anhand der Bilder mehrerer Kameras durchgeführt werden.

Das Identifizieren der Abfolge zu dem Gargut gehörigen Bildpunkte kann auch als Segmentierung bezeichnet werden. Das Identifizieren kann beispielsweise durch Objekterkennung, Bestimmung von Helligkeits- und/oder Farbunterschieden (z.B. dunkle Garraumwandung, Gargutträger und Gargutgefäße, helles Gargut) usw. durchgeführt werden.

Das eine Bild, in dem die Bildpunkte identifiziert werden, kann insbesondere das erste Bild der Bildfolge sein, das zum Durchführen des Verfahrens verwendet wird.

Die Methode des optischen Flusses (engl. "Optical Flow"), insbesondere auch die Methode des dichten optischen Flusses (engl. "Dense Optical Flow"), ist grundsätzlich bekannt. Dabei wird die Bewegung von in Bildern vorhandenen Objekten durch die Verfolgung der für die Objekte charakteristischen Bildpunkte über eine Folge von Bildern erfasst, insbesondere von Bild zu Bild. Für aufeinanderfolgende Bilder ergibt sich für jeden der Bildpunkte in der Bildebene eine insbesondere in Polarkoordinaten dargestellte Bewegungsrichtung (repräsentiert durch den Polarwinkel φ) und Bewegungsgeschwindigkeit (repräsentiert durch den Radius r). Dies entspricht der Zuordnung eines in der Bildebene liegenden Vektors zu einem jeweiligen Bildpunkt, wobei die Richtung des Vektors der Bewegungsrichtung des Bildpunkts und seine Länge der Bewegungsgeschwindigkeit entspricht. Diese Bewegung kann über mehr als zwei Bilder fortgeführt werden. Insbesondere kann so auch der Verlauf der Bewegung der Bildpunkte in der Bildebene für mehrere Bilder nachvollzogen werden.

Dass die Bewegungen der zuvor identifizierten ("segmentierten") Bildpunkte in Klassen für unterschiedliche Bewegungsrichtungen klassifiziert werden, umfasst insbesondere, dass nur die Bewegungen der zuvor identifizierten Bildpunkte in Klassen für unterschiedliche Bewegungsrichtungen einklassifiziert werden.

Es ist eine Weiterbildung, dass die Methode des optischen Flusses nur auf die zuvor als zum Gargut gehörigen Bildpunkte angewendet wird. Es ist eine besonders vorteilhafte Weiterbildung, dass die Methode des optischen Flusses auf alle Bildpunkte angewandt wird und danach nur noch die als dem Gargut zugehörig identifizierten Bildpunkte weiterbetrachtet werden. Es ist eine Weiterbildung, dass die identifizierten Bildpunkte für alle Bilder der verwendeten Bildfolge den in dem ersten Bild identifizierten Bildpunkten entsprechen.

Das Klassifizieren der Bewegungen der Bildpunkte für unterschiedliche Bewegungsrichtungen umfasst insbesondere, dass überprüft wird, ob die aus der Methode des optischen Flusses bestimmten Bewegungsrichtungen in einem bestimmten Bezug zu mindestens einer vorgegebenen Bewegungsrichtung stehen oder nicht. Ist dies der Fall, wird der zugehörige Bildpunkt einer dieser Bewegungsrichtung zugeordneten Klasse zugeordnet, andernfalls nicht. Es besteht somit die Möglichkeit, dass keiner der zuvor identifizierten Bildpunkte zumindest einer der Klassen zugeordnet wird, sondern - für den gesamten Behandlungsablauf oder zeitliche Abschnitte davon - "klassenlos" bleibt.

Es ist eine Weiterbildung, dass die Bildpunkte ungewichtet klassifiziert werden, also jeder Bildpunkt den gleichen Einheitswert aufweist, z.B. "1". Die Zahl einer Klasse entspricht also genau der Zahl der Bildpunkte in dieser Klasse.

Es ist eine Weiterbildung, dass die Bildpunkte ungewichtet klassifiziert werden, also jedem Bildpunkt ein Wichtungsfaktor zugeordnet wird, wodurch jedem Bildpunkt eine "gewichtete Zahl" zugeordnet wird. Folglich können unterschiedliche Bildpunkte in unterschiedlichem Maß zu der (Gesamt-)Zahl in den Klassen beitragen. Es ist eine Weiterbildung, dass die Wichtung abhängig von der Bewegungsgeschwindigkeit des jeweiligen Bildpunkts ist. Beispielsweise können der Wichtungsfaktor und damit die gewichtete Zahl umso größer sein, je größer die Bewegungsgeschwindigkeit ist. Insbesondere kann der Wichtungsfaktor eine Funktion der Bewegungsgeschwindigkeit sein, insbesondere proportional zu der Bewegungsgeschwindigkeit sein.

Es ist eine Weiterbildung, dass die unterschiedlichen Bewegungsrichtungen Bewegungen in entgegengesetzte Richtungen entlang der gleichen Achse umfassen. Es ist eine Weiterbildung, dass die unterschiedlichen Bewegungsrichtungen Bewegungen in entgegengesetzte Richtungen entlang der mehrerer Achsen umfassen.

Dass aus den Zahlen mindestens eine das Volumen des Garguts betreffende Größe berechnet wird, umfasst insbesondere, dass aus der absoluten Größe und/oder der Relation(en) der Zahlen mindestens zweier Klassen zueinander diese Größe abgeleitet oder abgeschätzt wird. Der Zusammenhand kann auch die Zahl der klassenlosen Bildpunkte umfassen. Der Zusammenhang kann beispielsweise eine Relation zwischen den Zahlen unterschiedlicher Klassen und/oder der klassenlosen Bildpunkte, eine Relation zu einem Schwellwert, usw. umfassen. Der Zusammenhang zwischen den Zahlen und der mindestens einen Größe kann beispielsweise durch Experimente, Simulationen und/oder Maschinenlernen usw. bestimmt werden. Der Zusammenhang kann beispielsweise in Form einer Tabelle oder einer Funktion mit den Zahlen als Variablen in dem Haushaltsgargerät gespeichert sein.

Das Erfüllen des mindestens einen vorgegebenen Kriteriums kann das Erfüllen einer Bedingung oder Relation, das Erfüllen einer Bedingung aus einer Gruppe mehrerer Bedingungen und/oder das gleichzeitige Erfüllen von mindestens zwei Bedingungen aus einer Gruppe mehrerer Bedingungen umfassen. Das Kriterium kann beispielsweise ein Erreichen, Überschreiten und/oder Unterschreiten mindestens eines vorgegeben Schwellwerts umfassen.

Es ist eine Weiterbildung, dass das Kriterium das Erfüllen mindestens eines Zusammenhangs der den jeweiligen Klassen zugeordneten Zahlen und ggf. der Zahl der klassenlosen Bildpunkte umfasst. In dieser Weiterbildung wird also keine das Volumen betreffende physikalische Größe explizit berechnet, sondern die mindestens eine das Volumen betreffende Größe ist implizit bzw. analog durch der Zusammenhang der Zahlen gegeben.

Es ist eine Ausgestaltung, dass die unterschiedlichen Bewegungsrichtungen eine Bewegung in Richtung der Schwerkraft und eine Bewegung gegen die Richtung der Schwerkraft umfassen, also Bewegungen in entgegengesetzte Bewegungsrichtungen entlang der Achse der Schwerkraft ("Schwerkraftachse"). Dies ergibt den Vorteil, dass auf besonders einfache Weise überprüft werden kann, ob sich das Gargut nach oben bewegt bzw. hebt (im Folgenden auch als "Hebung" bezeichnet) oder ob es sich nach unten bewegt bzw. absenkt (im Folgenden auch als "Senkung" bezeichnet). Zudem ist so auch eine quantitative Bestimmung der Hebung und Senkung besonders einfach umsetzbar. Die Schwerkraftachse entspricht in sehr guter Näherung der vertikalen - insbesondere nach unten gerichteten - Raumachse. Die Schwerkraftachse lässt sich im Bild einer Kamera durch deren geometrische Anordnung und Ausrichtung bestimmen, und zwar unabhängig von einer Beladung mit Gargut.

Es ist eine Ausgestaltung, dass ein Bildpunkt einer ersten Klasse (entsprechend der Hebung) zugerechnet wird, wenn er sich innerhalb einer ersten vorgegebenen Winkelabweichung zu der Schwerkraftachse entgegen der Richtung der Schwerkraft bewegt, und einer zweiten Klasse (entsprechend der Senkung) zugerechnet wird, wenn er sich innerhalb einer zweiten vorgegebenen Winkelabweichung zu Schwerkraftachse in Richtung der Schwerkraft bewegt. So wird der Vorteil erreicht, dass eine besonders einfache Einklassifizierung bereitgestellt wird, die zuverlässige Ergebnisse liefert.

Dass sich ein Bildpunkt innerhalb einer vorgegebenen Winkelabweichung zu einer bestimmten Referenzachse bewegt, umfasst insbesondere, dass eine Bewegungsrichtung des Bildpunkts in der Bildebene eine Winkelabweichung zu der Referenzachse aufweist, die nicht größer oder kleiner ist als die vorgegebene Winkelabweichung. Die Winkelabweichung kann symmetrisch oder asymmetrisch zu der Achse sein, d.h., dass die Größe der Winkelabweichung im Uhrzeigersinn und die Größe der Winkelabweichung gegen den Uhrzeigersinn gleich oder unterschiedlich sein können.

Es ist eine Weiterbildung, dass ein Bildpunkt in die erste Klasse einklassifiziert wird, wenn die Winkelabweichung zu der nach unten gerichtete Schwerkraftachse im Uhrzeigersinn in den Winkelbereichen [φ₁ₗ; φ₁ᵤ] oder ]φ₁ₗ; φ₁ᵤ[ liegt, wobei die Randbedingungen 90° < φ₁ₗ ≤ 180° und 180° ≥ φ₁ᵤ < 270° gelten.

Es ist eine für eine zuverlässige und robuste Bestimmung der das Volumen betreffenden Größe besonders vorteilhafte Weiterbildung, dass 150° ≤ φ₁ₗ ≤ 160° gewählt wird und/oder 200° ≤ φ₁ᵤ ≤ 210° gewählt wird. Allgemein kann 180° - φ₁ₗ = φ₁ᵤ - 180° (symmetrische Winkelabweichung) oder 180° - φ₁ₗ <> φ₁ᵤ - 180° (asymmetrische Winkelabweichung) gelten.

Es ist eine Weiterbildung, dass ein Bildpunkt in die zweite Klasse einklassifiziert wird, wenn die Winkelabweichung zu der nach unten gerichtete Schwerkraftachse im Uhrzeigersinn in den Winkelbereichen [φ₂ₗ; φ₂ᵤ] oder ]φ₂ₗ; φ₂ᵤ[ liegt, wobei die Randbedingungen 270° < φ₂ₗ ≤ 360° ≡ 0° und 0° ≥ φ₂ᵤ > 90° gelten.

Es ist eine für eine zuverlässige und robuste Bestimmung der das Volumen betreffenden Größe besonders vorteilhafte Weiterbildung, dass 330° ≤ φ₂ₗ ≤ 340° gewählt wird und/oder 20° ≥ φ₂ᵤ > 30° gewählt wird. Allgemein kann 360° - φ₂ₗ = φ₂ᵤ (symmetrische Winkelabweichung) oder 360° - φ₂ₗ <> φ₂ᵤ (asymmetrische Winkelabweichung) gelten.

Ist beispielsweise die Referenzachse die nach unten gerichtete Schwerkraftachse und sind die ersten und zweiten Winkelabweichungen symmetrisch, z.B. betragsmäßig 20°, werden diejenigen Bildpunkte in die erste Klasse einklassifiziert, deren Bewegungsrichtungen innerhalb eines Winkelbereichs von [-20°; +20°] oder ]-20°; +20°[ zu der Schwerkraftachse liegen, und diejenigen Bildpunkte in die zweite Klasse einklassifiziert, deren Bewegungsrichtungen innerhalb eines Winkelbereichs [160°; 200°] oder ]160°; 200°[ zu der Schwerkraftachse liegen.

Es ist eine Ausgestaltung, dass die unterschiedlichen Bewegungsrichtungen eine Bewegung von einem Oberflächenschwerpunkt des Garguts weg und eine Bewegung zu dem Oberflächenschwerpunkt des Garguts hin umfassen. Dadurch wird der Vorteil erreicht, dass zusätzlich oder alternativ zu der Hebung und Senkung auch eine seitliche bzw. laterale Aufweitung des Garguts (im Folgenden als "Expansion" bezeichnet) und eine laterale Verschmälerung des Garguts (im Folgenden als "Kontraktion" bezeichnet) berücksichtigt werden kann, um die mindestens eine das Volumen betreffende Größe des Garguts zu berechnen.

Es ist eine Weiterbildung, dass der Oberflächenschwerpunkt dem geometrischen Schwerpunkt der segmentierten Bildpunkt in der Bildebene entspricht.

Es ist eine Ausgestaltung, dass ein Oberflächenschwerpunkt des Garguts bestimmt wird und für die zu dem Gargut gehörigen Bildpunkte eine jeweilige Verbindungslinie zu dem Oberflächenschwerpunkt bestimmt wird und ein Bildpunkt einer dritten Klasse (entsprechend der Expansion) zugerechnet wird, wenn er sich innerhalb einer dritten vorgegebenen Winkelabweichung zu einer Verbindungslinie von dem Oberflächenschwerpunkt wegbewegt, und einer vierten Klasse (entsprechend der Kontraktion) zugerechnet wird, wenn er sich innerhalb einer vierten vorgegebenen Winkelabweichung zu einer Verbindungslinie zu dem Oberflächenschwerpunkt hinbewegt. So wird der Vorteil erreicht, dass auf besonders einfach umsetzbare Weise ein zuverlässiges Maß für die Expansion und Kontraktion des Garguts bereitgestellt wird.

Dass sich ein Bildpunkt innerhalb einer vorgegebenen Winkelabweichung zu der Verbindungslinie von dem Oberflächenschwerpunkt wegbewegt, umfasst insbesondere, dass eine Bewegungsrichtung des Bildpunkts in der Bildebene eine Winkelabweichung zu der von dem Oberflächenschwerpunkt zu diesem Bildpunkt gerichteten Verbindungsachse aufweist, die nicht größer oder kleiner ist als die vorgegebene dritte Winkelabweichung. Dass sich ein Bildpunkt innerhalb einer vorgegebenen Winkelabweichung zu der Verbindungslinie zu dem Oberflächenschwerpunkt hinbewegt, umfasst insbesondere, dass eine Bewegungsrichtung des Bildpunkts in der Bildebene eine Winkelabweichung gegen die von dem Oberflächenschwerpunkt zu diesem Bildpunkt gerichteten Verbindungsachse aufweist, die nicht größer oder kleiner ist als die vorgegebene vierte Winkelabweichung. Die Winkelabweichung kann symmetrisch oder asymmetrisch zu der Verbindungsachse sein.

Es ist eine Weiterbildung, dass ein Bildpunkt in die dritte Klasse einklassifiziert wird, wenn die Winkelabweichung zu der von dem Oberflächenschwerpunkt weg gerichteten Verbindungsachse im Uhrzeigersinn in den Winkelbereichen [φ₃ₗ; φ₃ᵤ] oder ]φ₃ₗ; φ₃ᵤ[ liegt, wobei die Randbedingungen 270° < φ₃ₗ ≤ 360° ≡ 0° und 0° ≥ φ₃ᵤ > 90° gelten.

Es ist eine für eine zuverlässige und robuste Bestimmung der das Volumen betreffenden Größe besonders vorteilhafte Weiterbildung, dass 330° ≤ φ₃ₗ ≤ 360° gewählt wird und/oder 0° ≥ φ₃ᵤ > 30° gewählt wird. Allgemein kann 360° - φ₃ₗ = φ₃ᵤ (symmetrische Winkelabweichung) oder 360° - φ₃ₗ <> φ₃ᵤ (asymmetrische Winkelabweichung) gelten. Allgemein kann 180° - φ₁ₗ = φ₁ᵤ - 180° (symmetrische Winkelabweichung) oder 180° - φ₁ₗ <> φ₁ᵤ - 180° (asymmetrische Winkelabweichung) gelten. Es ist eine besonders vorteilhafte Weiterbildung, dass φ₃ₗ = 360° gilt, d.h., dass ein Bildpunkt nur unter der Bedingung in die dritte Klasse einklassifiziert wird, dass die Winkelabweichung seiner Bewegungsrichtung innerhalb des Winkelbereichs [0°; φ₃ᵤ] liegt, z.B. innerhalb des Winkelbereichs [0°; 30°].

Es ist eine Weiterbildung, dass ein Bildpunkt in die vierte Klasse einklassifiziert wird, wenn die Winkelabweichung zu der Verbindungsachse im Uhrzeigersinn in den Winkelbereichen [φ₄ₗ; φ₄ᵤ] oder ]φ₄ₗ; φ₄ᵤ[ liegt, wobei die Randbedingungen 90° < φ₄ₗ ≤ 180° und 180° ≥ φ₄ᵤ < 270° gelten.

Es ist eine für eine zuverlässige und robuste Bestimmung der das Volumen betreffenden Größe besonders vorteilhafte Weiterbildung, dass 150° ≤ φ₄ₗ ≤ 160° gewählt wird und/oder 180° ≤ φ₄ᵤ ≤ 210° gewählt wird. Allgemein kann 180° - φ₁ₗ = φ₁ᵤ - 180° (symmetrische Winkelabweichung) oder 180° - φ₁ₗ <> φ₁ᵤ - 180° (asymmetrische Winkelabweichung) gelten. Es ist eine besonders vorteilhafte Weiterbildung, dass φ₄ᵤ = 180° gilt, d.h., dass ein Bildpunkt nur unter der Bedingung in die vierte Klasse einklassifiziert wird, dass die Winkelabweichung seiner Bewegungsrichtung innerhalb des Winkelbereichs [φ₄ₗ; 180°] liegt, z.B. innerhalb des Winkelbereichs [150°; 180°].

Sind beispielsweise die bezüglich der als Referenzachse dienenden Verbindungsachse dritten und vierten Winkelabweichungen symmetrisch, z.B. betragsmäßig auf 25° vorgegeben, würden diejenigen Bildpunkte in die dritte Klasse einklassifiziert, deren Bewegungsrichtungen innerhalb eines Winkelbereichs von [-25°; +25°] oder ]25°; +25°[ in Richtung der von dem Oberflächenschwerpunkt wegzeigende Verbindungsachse liegen, und diejenigen Bildpunkte in die vierte Klasse einklassifiziert, deren Bewegungsrichtungen innerhalb eines Bereichs [160°; 200°] oder ]160°; 200°[ zu der Verbindungsachse liegen.

Es ist eine Ausgestaltung, dass ein Bildpunkt nur dann einer bestimmten Klasse zugeordnet wird, wenn seine Bewegungsgeschwindigkeit oberhalb eines vorgegebenen Schwellwerts liegt. Dadurch wird die Bestimmung der das Volumen betreffenden Größe robuster, weil Bildpunkte, die klassifiziert werden, dann eine Mindestgeschwindigkeit aufweisen müssen und folglich sich kaum bewegende Bildpunkte nicht berücksichtigt werden.

Es ist eine Weiterbildung, dass die Bewegungsgeschwindigkeit der skalaren Länge des Bewegungsvektors des jeweiligen Bildpunkts entspricht.

Es ist eine Weiterbildung, dass die zu dem Gargut gehörigen Bildpunkte in dem Bild anhand ihrer Farbe identifiziert werden. Dies ist besonders einfach umsetzbar und beruht auf der Erkenntnis, dass Gargut typischerweise eine von der meist dunkelblauen, dunkelgrauen oder schwarzen Garraumwandung, dem meist schwarzen Backblech und dem meist silberfarbenen Gitterrost sowie Gargutbehältern merklich unterschiedliche Farbe aufweist. Dies gilt insbesondere für frischen Teig, der typischerweise eine hellbraune Farbe aufweist. Bildpunkte, deren Farbkoordinaten in einem für die Farbe des eingebrachten Garguts vorgegebenen Unterraum des Farbraums des Bilds liegen, werden dem Gargut zugeordnet, andere Bildpunkte insbesondere nicht.

Es ist eine Weiterbildung, dass das aufgenommene Bild ein RGB-Bild ist, die möglichen Farben der Bildpunkte also im RGB-Farbraum liegen.

Es ist eine besonders einfach umsetzbare Weiterbildung, dass die zu dem Gargut gehörigen Bildpunkte in dem Bild dadurch identifiziert werden, dass deren auf ein HSV "Hue, Saturation, Value")-Farbkoordinatensystem bezogenen H-Werte innerhalb eines vorgegebenen Wertebereichs liegen. Dadurch wird der Vorteil erreicht, dass die Zugehörigkeit eines Bildpunkts zu hellbraunem Gargut anhand nur einer Koordinatenachse des Farbraums zuverlässig bestimmt werden kann, nämlich seiner Position auf der H-Achse. Dabei wird ausgenutzt, dass im HSV-Farbraum Brauntöne auf der H-Achse liegen, was insbesondere für braunes Gargut, insbesondere hellbraunes Gargut, insbesondere Teig, vorteilhaft ist.

Folglich können beispielsweise zu einem Teigling gehörige Bildpunkte dadurch identifiziert, dass derer Werte auf der H-Achse ("H-Werte") innerhalb eines durch einen unteren Schwellwert (unterer "H-Schwellwert") und einen oberen Schwellwert (oberer "H-Schwellwert") definierten Wertebereichs liegen, welcher die Brauntöne typischer Teiglinge umfasst.

Wird ein Bild in einem anderen Farbraum als dem HSV-Farbraum aufgenommen (z.B. als RGB-Bild), können die Farbkoordinaten der Bildpunkte aus dem ursprünglichen Farbraum in den HSV-Farbraum umgerechnet bzw. transformiert werden.

Alternativ zu dem HSV-Farbraum kann auch ein - insbesondere bezüglich von Grenzwerten angepasster - HSL ("Hue, Saturation, Lightness)-Farbraum vorteilhaft verwendet werden.

Es ist eine Ausgestaltung, dass die mindestens eine das Volumen des Garguts betreffende Größe mindestens eine Größe aus der Gruppe: Volumen des Garguts, zeitliche Änderung des Volumens des Garguts und/oder Änderungsgeschwindigkeit des Volumens des Garguts umfasst.

Es ist eine Ausgestaltung, dass das mindestens eine vorgegebene Kriterium ein Erreichen eines maximalen Volumens des Garguts und/oder ein Erreichen einer minimalen Änderung des Volumens des Garguts umfasst. So wird der Vorteil erreicht, dass ein Erreichen eines Extremwerts und/oder ein Annähern an einen stationären Wert des Volumens besonders gut erkennbar ist, insbesondere das Erreichen eines maximalen Volumens des Garguts und/oder das das Erreichen einer geringsten Volumenänderung. Die minimale Volumenänderung kann z.B. dann angenommen werden, wenn die Volumenänderung, insbesondere Volumenerhöhung, des Garguts zwischen zwei aufeinanderfolgenden Bildern kleiner als ein vorgegebener Schwellwert ist.

Es ist eine Ausgestaltung, dass der mindestens eine die Behandlung des Garguts beeinflussende Betriebsparameter mindestens einen Betriebsparameter aus der Gruppe Temperatur in dem Behandlungsraum (auch als "Garraumtemperatur" bezeichenbar) und/oder Feuchtigkeit in dem Behandlungsraum umfasst. Dies ergibt insbesondere auf die Garraumtemperatur und/oder die Feuchtigkeit in dem Behandlungsraum empfindlich durch Volumenänderungen reagierendes Gargut den Vorteil, dass die Behandlung des Garguts besonders zuverlässig und zeitnah auf den Eintritt bestimmter Gargutzustände anpassbar ist und sich dadurch das Garergebnis verbessern lässt.

Es ist eine Ausgestaltung, dass das Gargut Teig ist. Auf solches Gargut ist das Verfahren besonders vorteilhaft anwendbar, weil bei Teig dessen Volumen und/oder dessen Volumenänderung ein besonders zuverlässiger Anzeiger für das Vorliegen und/oder den Abschluss bestimmter Behandlungsphasen ist. Lassen sich die Behandlungsphasen, insbesondere deren Ende, zuverlässiger bestimmen, wird auch das Ergebnis der Zubereitung des Garguts merklich verbessert.

Es ist eine Weiterbildung, dass der Teig Brotteig ist, weil das für Brotteig dessen Volumen bzw. eine daraus ableitbare Größe besonders gut erfassbar ist und zudem Brotteig verschiedene Behandlungsphasen aufweist, welche ein merklich unterschiedliches Volumenverhalten zeigen und die für ein besonders gutes Gelingen unterschiedliche Umgebungsbedingungen benötigen.

Beim Brotbacken geht der Teig in einer ersten Phase bei hoher hohe Luftfeuchtigkeit und hohen Garraumtemperaturen unter starker Volumenzunahme auf (sog. "Teigaufgang"). Es folgt ein Übergang zu einer zweiten Phase (sog. "Fertigbacken" oder "Bräunen"), in welcher der Brotteig sein Volumen unter Erzeugung einer gebräunten Kruste weitgehend beibehält oder sich dieses sogar leicht verringert. Die zweite Phase nutzt typischerweise niedrigere Temperaturen und eine niedrigere Feuchtigkeit in dem Garraum als die erste Phase und dauert länger als die erste Phase. Je genauer der Übergangszeitpunkt zwischen den beiden Phasen bestimmt werden kann, um die Garraumatmosphäre (insbesondere in Bezug auf die Garraumtemperatur, aber auch in Bezug auf den Feuchtigkeitsgrad und/oder die dann verwendeten Heizkörper, usw.) anzupassen, desto besser ist das Backergebnis.

Es ist eine Ausgestaltung, dass dann, wenn ein maximales Volumen des Teigs und/oder eine minimale Änderung des Volumens des Teigs erreicht ist, eine Temperatur und/oder eine Feuchtigkeit in dem Behandlungsraum reduziert wird. So lässt sich bei Übergang von der Teigaufgangsphase zu der Bräunungsphase ein besonders gutes Gelingergebnis erreichen.

Die Aufgabe wird auch gelöst durch ein Haushaltsgargerät, aufweisend
- einen Behandlungsraum, der zum Wärmebehandeln von darin eingebrachtem Gargut eingerichtet ist,
- mindestens eine Kamera zum Aufnehmen von Bildern aus dem Behandlungsraum und
- eine Datenverarbeitungseinrichtung, die dazu eingerichtet ist
- in einem Bild einer Abfolge von Bildern zu dem Gargut gehörige Bildpunkte zu identifizieren,
- für folgende Bilder eine Bewegungsrichtung und eine Bewegungsgeschwindigkeit der Bildpunkte mittels der Methode des optischen Flusses, insbesondere der Methode des dichten optischen Fluss, zu berechnen,
- die Bewegungen der zuvor identifizierten Bildpunkte in Klassen für unterschiedliche Bewegungsrichtungen zu klassifizieren,
- die Zahlen der Bildpunkte, welche in die jeweiligen Klassen fallen, zu zählen,
- aus den Zahlen mindestens eine das Volumen des Garguts betreffende Größe zu berechnen und
- dann, wenn die mindestens eine berechnete Größe mindestens ein vorgegebenes Kriterium erfüllt, mindestens einen die Behandlung des Garguts beeinflussenden Betriebsparameter des Haushaltsgargeräts zu variieren.

Das Haushaltsgargerät kann analog zu dem Verfahren ausgebildet werden, und umgekehrt, und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein aus einem Behandlungsraum aufgenommenes Bild, in dem eine Oberfläche eines Brotteigs abgebildet ist und in dem mehrere Koordinatensysteme eingezeichnet sind;
- Fig.2: zeigt das Bild aus Fig.1 mit der Schwerpunktachse;
- Fig.3: zeigt das Bild aus Fig.1 mit der Verbindungsachse zwischen Oberflächenschwerpunkt und Bildpunkt; und
- Fig.4: zeigt einen möglichen Verfahrensablauf zum Durchführen des Verfahrens.

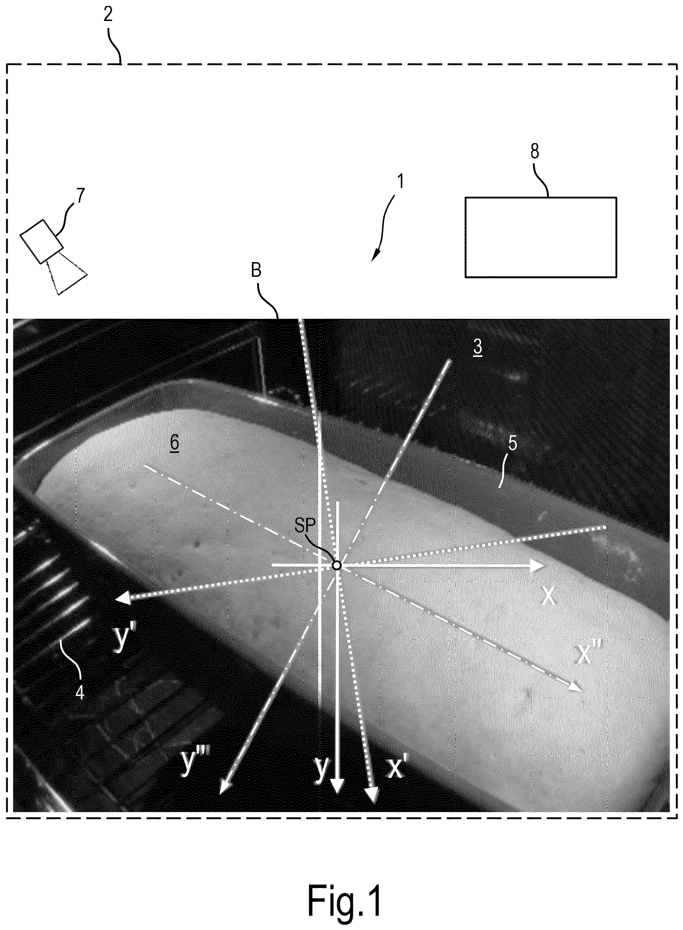

**Fig.1** zeigt ein aus einem Behandlungsraum in Form eines Garraums 1 eines Haushalts-Gargeräts 2 mittels einer Digitalkamera 7 aufgenommenes Farbbild B. Das Haushalts-Gargerät 2 kann beispielsweise ein Backofen mit zusätzlicher Dampfbehandlungsfunktionalität, z.B. sog. "Added Steam", sein. In dem Bild B sind eine Garraumwandung 3, ein Gitterrost 4, ein auf dem Gitterrost 4 abgelegte kastenförmige Backform 5 sowie einen in der Backform 5 eingelegten Teigling 6, insbesondere aus Brotteig. Das Bild B weist typischerweise p Bildpunkte in seiner x-Richtung bzw. entlang seiner x-Achse x und q Bildpunkte in seiner y-Richtung bzw. entlang seiner y-Achse y auf, z.B. 640 x 480 Bildpunkte, 1024 x 768 Bildpunkte, usw. Die x-Achse x und die y-Achse y kreuzen sich hier im geometrischen Oberflächenschwerpunkt SP der dem Teigling 6 zugehörigen Bildpunkte.

Ferner eingezeichnet sind die sich ebenfalls im geometrischen Oberflächenschwerpunkt SP kreuzenden kartesischen Koordinatenachsen x' und y', von denen die Achse x' der nach unten gerichteten Schwerpunktachse entspricht und deshalb auch als "g" bezeichnet werden kann. Die Schwerpunktachse g ist für alle Bildpunkte identisch. Die Schwerpunktachse x' bzw. g ergibt sich aus der Anordnung und Ausrichtung der Kamera 7 und ist deshalb unabhängig vom Vorhandensein des Teiglings 6. Das (x', y')-Koordinatensystem ist hier relativ zum (x, y)-Koordinatensystem gedreht.

Außerdem eingezeichnet sind die sich ebenfalls im geometrischen Oberflächenschwerpunkt SP kreuzenden kartesischen Koordinatenachsen x" und y", von denen die Achse x" entlang der Längsrichtung des Teiglings 6 ausgerichtet ist. Die optionale Nutzung dieses Koordinatensystem ist vorteilhaft, um die Bewegung der Bildpunkte besonders einfach in ein Verhältnis zum Gargut zu setzen.

Das Haushalts-Gargerät 2 weist ferner eine Datenverarbeitungseinrichtung 8 mit der Kamera 7 datentechnisch gekoppelt ist und die Kamera 7 zur Bildaufnahme ansteuern kann und außerdem zum Verarbeiten der von der Kamera 7 übertragenen Bilder B eingerichtet, z.B. programmiert ist, beispielsweise um eine das Volumen des Teiglings 6 betreffende Größe, z.B. eine Volumenänderung über die Zeit, zu berechnen. Die Datenverarbeitungseinrichtung 8 kann auch dazu eingerichtet sein, mindestens einen die Behandlung des Teiglings 6 beeinflussenden Betriebsparameterwie eine Garraumtemperatur, eine Feuchtigkeit usw. zu variieren. Die Datenverarbeitungseinrichtung 8 kann insbesondere eine zentrale Steuereinrichtung des Haushalts-Gargeräts 2 sein.

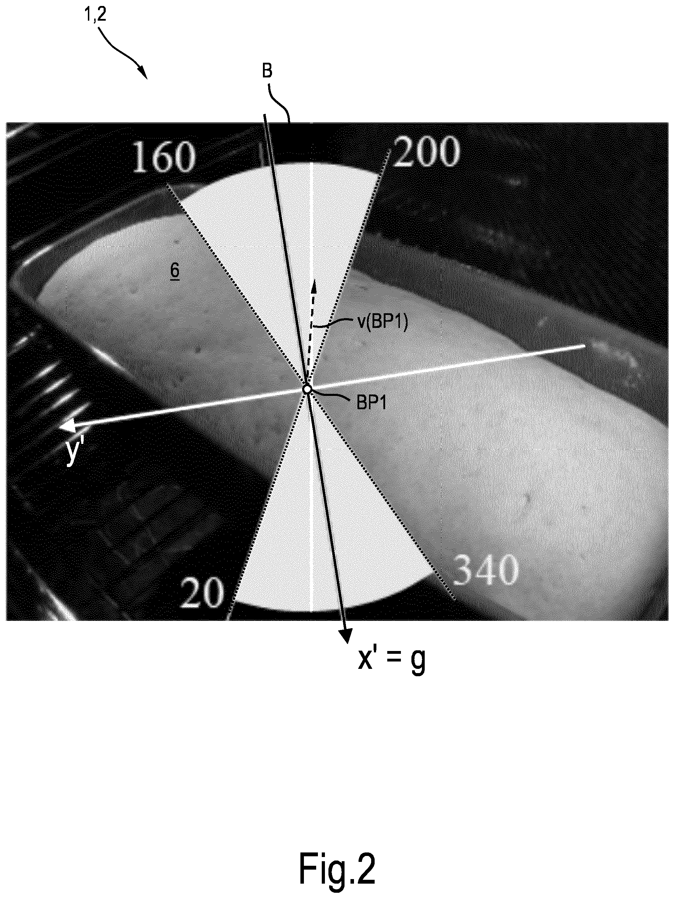

Fig.2 zeigt das Bild B aus Fig.1 mit der Schwerpunktachse g gezeichnet durch einen dem Teigling 6 zugeordneten Bildpunkt BP1. Dem Bildpunkt BP1 kann ein durch die Methode des dichten optischen Pfads aus zeitlich aufeinanderfolgenden Bildern B berechneter Bewegungsvektor v(BP1) zugeordnet werden. Der Bewegungsvektor v(BP1) kann als Skalarprodukt aus seiner normierten Bewegungsrichtung und seiner Länge ausgedrückt werden, insbesondere in Polarkoordinaten r (Länge) und φ (Winkel zu Schwerpunktachse g).

Ferner eingezeichnet ist ein erster Winkelbereich [160°; 200°] in Richtung der Schwerkraft bzw. von ± 20° gegen die Richtung der Schwerkraft (entsprechend der Richtung entgegen der Schwerkraftachse g). Liegt der Bewegungsvektor v(BP1) innerhalb des ersten Winkelbereichs, kann dies als Hebung des Teiglings 6 am Ort dieses Bildpunkts BP1 angesehen werden.

Zudem ist ein zweiter Winkelbereich [340°; 20°] bzw. ± 20° in Richtung der Schwerkraft (entsprechend der Richtung entlang der Schwerkraftachse g) eingezeichnet. Liegt der Bewegungsvektor v(BP1) innerhalb des zweiten Winkelbereichs, kann dies als Senkung des Teiglings 6 am Ort dieses Bildpunkts BP1 angesehen werden.

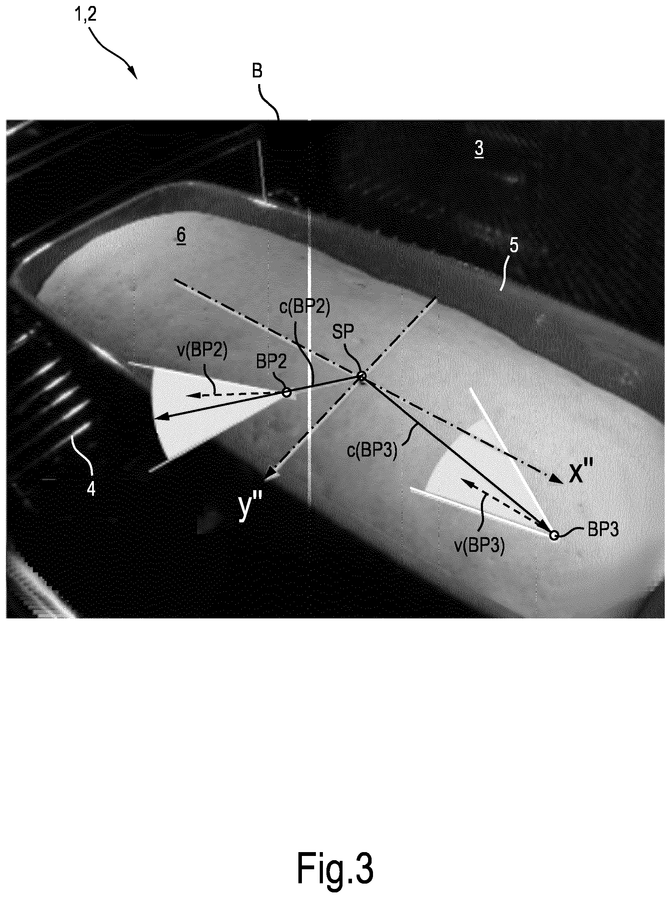

Fig.3 zeigt das Bild B aus Fig.1 mit einer Verbindungsachse c(BP1) zwischen dem Oberflächenschwerpunkt SP und einem Bildpunkt BP2 sowie mit einer Verbindungsachse c(BP2) zwischen dem Oberflächenschwerpunkt SP und einem Bildpunkt BP3 des Teiglings 6. Die Verbindungsachsen c(BP2) und c(BP3) weisen von dem Oberflächenschwerpunkt SP zu dem jeweiligen Bildpunkt BP2 bzw. BP3.

Ferner eingezeichnet sind die Bewegungsvektoren v(BP2) und v(BP3) der Bildpunkte BP2 bzw. BP3. Während der Bewegungsvektor v(BP2) innerhalb des eingezeichneten dritten Winkelbereichs, z.B. von ± 20° entlang der Verbindungsachse c(BP2) von dem Oberflächenschwerpunkt SP weg zeigt, zeigt der Bewegungsvektor v(BP3) innerhalb des eingezeichneten vierten Winkelbereichs, z.B. von ± 20° gegen die Verbindungsachse c(BP3), zu dem Oberflächenschwerpunkt SP hin. Dies kann so gedeutet werden, dass der Teigling am Ort des Bildpunkts BP2 expandiert, am Ort des Bildpunkts BP3 hingegen kontrahiert.

Es ist möglich, dass keiner, einige oder alle dem Teigling 6 zugeordnete Bildpunkte Bewegungsvektoren v aufweisen, die innerhalb des ersten oder des zweiten Winkelbereichs liegen und/oder die innerhalb des dritten oder des vierten Winkelbereichs liegen. Es ist ferner möglich, dass keiner, einige oder alle dem Teigling 6 zugeordnete Bildpunkte Bewegungsvektoren v aufweisen, die in keinem der Winkelbereiche liegen.

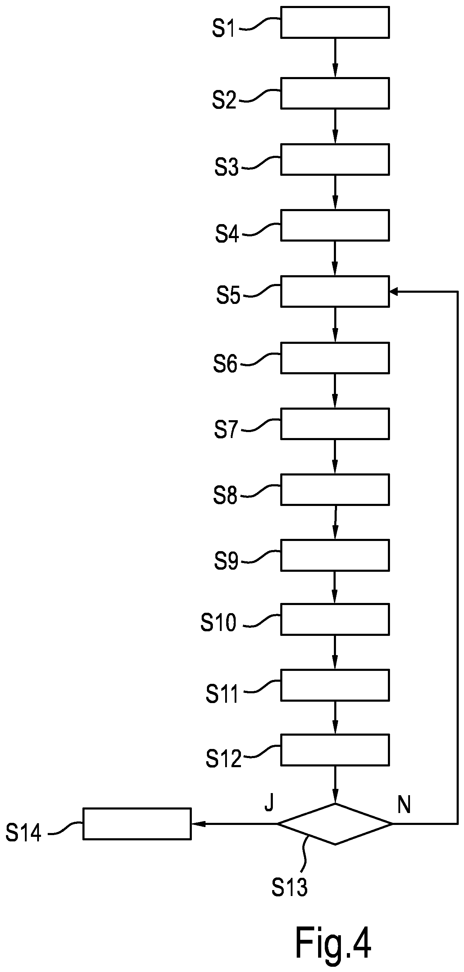

Fig.4 zeigt einen möglichen Verfahrensablauf zum Durchführen des Verfahrens zum Backen von Brot.

Nach Beschicken des Garraums 1 mit dem Teigling 6 wird, z.B. mittels der Datenverarbeitungseinrichtung 8 gesteuert, ein Behandlungsvorgang zum Brotbacken gestartet. In einem ersten Schritt S1 wird, z.B. gesteuert durch die Datenverarbeitungseinrichtung 8, mittels der Farbdigitalkamera 7 ein erstes RGB-Bild B₁ des Garraums einschließlich des Lattenrosts 4, der Backform 5 und des Teiglings 6 aufgenommen, z.B. analog zu dem Bild B aus Fig.1.

In einem Schritt S2 werden die RGB-Farbkoordinaten des Bilds B₁ in HSV (Hue, Saturation, Value)-Farbkoordinaten umgerechnet, z.B. von der Datenverarbeitungseinrichtung 8.

In einem dritten Schritt S3 werden, z.B. mittels der Datenverarbeitungseinrichtung 8, diejenigen Bildpunkte identifiziert, deren H-Werte innerhalb eines durch einen unteren Schwellwert (unterer "H-Schwellwert") und einen oberen Schwellwert (oberer "H-Schwellwert") definierten Wertebereichs liegen, welcher insbesondere einem Hellbraun eines frischen Teiglings 6 entspricht. Das Ergebnis dieser "Segmentierung" ist eine Bildmaske, in welcher allen detektierten Bildpunkten eine bestimmte Information, z.B. "1", zugeordnet ist und allen anderen Bildpunkten eine andere Information, z.B. "0", zugeordnet ist. Dabei wird davon ausgegangen, dass nur die dem Teigling 6 zugehörigen Bildpunkte innerhalb des vorgegebenen Wertebereichs liegen. Diese Bildpunkte können auch als "segmentierte" Bildpunkte bezeichnet werden.

Es ist eine Weiterbildung, dass diese Bildmaske einmal aus dem ersten Bild B₁ bestimmt wird und dann für das restliche Verfahren unverändert beibehalten wird.

In einem vierten Schritt S4 wird, z.B. mittels der Datenverarbeitungseinrichtung 8, der Oberflächenschwerpunkt SP der dem Teigling 6 zugeordneten segmentierten Bildpunkte bestimmt bzw. berechnet, z.B. der geometrische Schwerpunkt.

In einem fünften Schritt S5 wird, z.B. gesteuert durch die Datenverarbeitungseinrichtung 8, ein weiteres Bild Bᵢ mit i = 2 aufgenommen.

In einem sechsten Schritt S6 wird, z.B. mittels der Datenverarbeitungseinrichtung 8, die Methode des dichten optischen Flusses auf die Bilder Bᵢ und Bᵢ₋₁ angewandt. Der sich daraus für jeden der Bildpunkte ergebende Bewegungsvektor v in der (x, y)-Bildebene wird zunächst aus dem kartesischen Koordinatensystem in einen Bewegungsvektor v eines Polarkoordinatensystems transformiert, dessen Länge r seiner Bewegungsgeschwindigkeit und dessen Polarwinkel φ seine Bewegungsrichtung angibt. Das Ergebnis ist eine Bewegungsmatrix mit x · y Bewegungsvektoren v, die jeweils den an gleicher Matrixposition befindlichen Bildpunkten zugeordnet sind. Die Bewegungsmatrix ermöglicht somit eine Abschätzung der Bewegung der einzelnen Bildpunkte.

In einem siebten Schritt S7 wird, z.B. mittels der Datenverarbeitungseinrichtung 8, die in Schritt S3 berechnete Bildmaske auf die sich aus Schritt S6 ergebende Bewegungsmatrix angewandt, insbesondere durch skalare Multiplikation der sich entsprechenden Bildpunkte, so dass als Ergebnis nur noch die den Bildpunkten des Teiglings 6 zugeordneten Bewegungsvektoren beibehalten werden und den übrigen Bildpunkten kein Bewegungsvektor bzw. ein Bewegungsvektor der Länge null zugeordnet wird. In anderen Worten wird so eine Bewegungsmatrix erzeugt, bei der nur noch die den Bildpunkten des Teiglings 6 zugeordneten Bewegungsvektoren betrachtet werden.

In einem Schritt S8 werden, z.B. mittels der Datenverarbeitungseinrichtung 8, die segmentierten Bildpunkte daraufhin überprüft, ob ihre Bewegungsrichtung innerhalb eines vorgegebenen ersten Winkelbereichs gegen die Schwerkraftachse g liegen, also an diesen Bildpunkten eine Hebung stattgefunden hat. Ist dies der Fall, wird der Bildpunkt in eine erste Klasse einklassifiziert bzw. der ersten Klasse zugeordnet Aus Schritt S8 ergibt sich die Zahl n₁ aller solcher Bildpunkte.

In einem Schritt S9 werden, z.B. mittels der Datenverarbeitungseinrichtung 8, die segmentierten Bildpunkte daraufhin überprüft, ob ihre Bewegungsrichtung innerhalb eines vorgegebenen zweiten Winkelbereichs in Richtung der Schwerkraftachse g liegen, also an diesen Bildpunkten eine Senkung stattgefunden hat. Ist dies der Fall, wird der Bildpunkt in eine zweite Klasse einklassifiziert bzw. der zweiten Klasse zugeordnet. Aus Schritt S9 ergibt sich die Zahl n₂ aller solcher Bildpunkte.

In einem Schritt S10 werden, z.B. mittels der Datenverarbeitungseinrichtung 8, die segmentierten Bildpunkte daraufhin überprüft, ob ihre Bewegungsrichtung innerhalb eines vorgegebenen dritten Winkelbereichs entlang einer Verbindungsachse zwischen dem Oberflächenschwerpunkt SP und dem jeweiligen Bildpunkt liegt, also an diesen Bildpunkten eine Expansion stattgefunden hat. Ist dies der Fall, wird der Bildpunkt in eine dritte Klasse einklassifiziert bzw. der dritten Klasse zugeordnet. Aus Schritt S10 ergibt sich die Zahl n₃ aller solcher Bildpunkte.

In einem Schritt S11 werden, z.B. mittels der Datenverarbeitungseinrichtung 8, die segmentierten Bildpunkte daraufhin überprüft, ob ihre Bewegungsrichtung innerhalb eines vorgegebenen vierten Winkelbereichs entgegen der Verbindungsachse zwischen dem Oberflächenschwerpunkt SP und dem jeweiligen Bildpunkt liegt, also an diesen Bildpunkten eine Kontraktion stattgefunden hat. Ist dies der Fall, wird der Bildpunkt in eine vierte Klasse einklassifiziert bzw. der vierten Klasse zugeordnet. Aus Schritt S10 ergibt sich die Zahl n₄ aller solcher Bildpunkte.

In Schritt S12 wird, z.B. mittels der Datenverarbeitungseinrichtung 8, aus den Zahlen n₁ und n₂ und/oder aus den Zahlen n₃ und n₄ die Volumenänderung ΔV zwischen den Bildaufnahmen der Bilder Bᵢ₋₁ und Bᵢ bestimmt.

In Schritt S13 wird, z.B. mittels der Datenverarbeitungseinrichtung 8, überprüft, ob die Volumenänderung ΔV mindestens ein bestimmtes Kriterium erfüllt, z.B. gemäß ΔV < ΔVₜₕᵣ kleiner oder gemäß ΔV ≤ ΔVₜₕᵣ kleiner gleich als ein vorgegebener positiver Schwellwert ΔVₜₕᵣ ist, ΔV = 0 gilt oder ΔV < 0 gilt. Diese Kriterien entsprechen dem Zustand des Teiglings 6, bei dem sein Volumen V kaum noch wächst oder sogar bereits wieder leicht schrumpft, was auf den Übergang vom Aufgehen zum Bräunen hindeutet.

Erfüllt die Volumenänderung ΔV das mindestens eine Kriterium nicht ("N"), wird zu Schritt S5 zurückverzweigt und ein weiteres Bild Bᵢ mit i := i+1. Es ist besonders vorteilhaft, wenn zwischen der Aufnahme von Bildern Bᵢ und Bᵢ₊₁ ungefähr 10 s liegen.

Erfüllt die Volumenänderung ΔV das mindestens eine Kriterium jedoch ("J"), wird in Schritt S14, z.B. mittels der Datenverarbeitungseinrichtung 8, mindestens ein die Behandlung des Teiglings 6 beeinflussender Betriebsparameter des Haushaltsgargeräts variiert, beispielsweise die Garraumtemperatur herabgesetzt, die Luftfeuchtigkeit verringert, usw., in einer Weiterbildung abhängig von der Art des Garguts, insbesondere Teiglings 6, beispielsweise ob unterschiedliche Arten von Brotteig, Croissant-Teig, usw. verwendet werden.

Zur Berechnung des Winkelunterschieds zwischen den Bewegungsvektoren v der Bildpunkte und der betreffenden Referenzachse g bzw. c können Drehmatrizen eingesetzt werden

Selbstverständlich ist die vorliegende Erfindung nicht auf das gezeigte Ausführungsbeispiel beschränkt.

So können die Schritte S8 bis S11 in beliebiger Reihenfolge ausgeführt werden.

Auch können die Winkelbereiche fest vorgegeben oder - beispielsweise abhängig von einem verwendeten Betriebsprogramm oder einem bekannten Gargut - variabel einstellbar sein.

Außerdem kann optional die die Länge | r | der Bewegungsvektoren berücksichtigt werden, beispielsweise dadurch, dass durch Bildpunkte einklassifiziert werden, welche eine vorgegebene Mindestlänge | r |ₘᵢₙ aufweisen oder deren auf die jeweilige Referenzachse (Scherkraftachse g, Verbindungsachse c) projizierte Länge | rₚᵣₒⱼ | eine vorgegebene Mindestlänge | rₚᵣₒⱼ |ₘᵢₙ aufweist. Dabei werden in einer Weiterbildung überhaupt nur Bildpunkte einklassifiziert, die eine ausreichende Länge aufweisen. In einer anderen Weiterbildung werden zunächst auch Bildpunkte einklassifiziert, die keine ausreichende Länge aufweisen, und diese Bildpunkte dann am Ende der Schritte S8 bis S11 wieder aus den Klassen gelöscht.

Ferner kann auch die Zahl n₅ der in keine der Klassen einklassifizierten Bildpunkte dazu herangezogen werden, die Volumenänderung ΔV zwischen den Bildaufnahmen der Bilder Bᵢ₋₁ und Bᵢ zu bestimmen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Garraum
- 2: Haushalts-Gargerät
- 3: Garraumwandung
- 4: Gitterrost
- 5: Backform
- 6: Teigling
- 7: Kamera
- B: Bild
- BP1: Bildpunkt
- BP2: Bildpunkt
- BP3: Bildpunkt
- c: Verbindungsachse
- SP: Schwerpunkt
- S1-S14: Verfahrensschritte
- v: Bewegungsvektor
- x: x-Achse
- x': x'-Achse
- x": x"-Achse
- y: y-Achse
- y': y'-Achse
- y": y"-Achse
- g: Schwerkraftachse

## Patentansprüche

1. Verfahren (S1-S14) zum Bestimmen einer Volumengröße von in einem Behandlungsraum (1) eines Haushaltsgargeräts (2) behandeltem Gargut (6), bei dem
- in zeitlicher Abfolge Bilder (B) aus dem Behandlungsraum (1) aufgenommen werden (S1, S5),
- in einem Bild (B) der Bildfolge zu dem Gargut (6) gehörige Bildpunkte (BP1, BP2, BP3) identifiziert werden (S3),
- für folgende Bilder (B) eine Bewegungsrichtung und eine Bewegungsgeschwindigkeit der Bildpunkte (BP1, BP2, BP3) mittels der Methode des optischen Flusses, insbesondere der Methode des dichten optischen Fluss, berechnet werden (S6),
- die Bewegungsrichtungen der zuvor identifizierten Bildpunkte (BP1, BP2, BP3) in Klassen für unterschiedliche Bewegungsrichtungen klassifiziert werden (S8 - S11),
- die Zahlen der Bildpunkte (BP1, BP2, BP3), welche in die jeweiligen Klassen fallen, gezählt werden (S8 - S11),
- aus den Zahlen mindestens eine das Volumen des Garguts (6) betreffende Größe berechnet wird (S12) und
- dann, wenn die mindestens eine berechnete Größe mindestens ein vorgegebenes Kriterium erfüllt (S13), durch das Haushaltsgargerät (2) mindestens ein die Behandlung des Garguts (6) beeinflussender Betriebsparameter des Haushaltsgargeräts (2) variiert wird (S14).

2. Verfahren (S1-S14) nach Anspruch 1, bei dem die unterschiedlichen Bewegungsrichtungen
- eine Bewegung in Richtung der Schwerkraft (g) und
- eine Bewegung gegen die Richtung der Schwerkraft (g)
umfassen.

3. Verfahren (S1-S14) nach Anspruch 2, bei dem ein Bildpunkt (BP1)
- einer ersten Klasse zugerechnet wird, wenn er sich innerhalb einer ersten vorgegebenen Winkelabweichung zu einer Schwerkraftachse (g) entgegen der Richtung der Schwerkraft bewegt (S8), und
- einer zweiten Klasse zugerechnet wird, wenn er sich innerhalb einer zweiten vorgegebenen Winkelabweichung zu der Schwerkraftachse (g) in Richtung der Schwerkraft bewegt (S9).

4. Verfahren (S1-S14) nach einem der vorhergehenden Ansprüche, bei dem die unterschiedlichen Bewegungsrichtungen
- eine Bewegung von einem Oberflächenschwerpunkt (SP) des Garguts (6) weg (S10) und
- eine Bewegung zu dem Oberflächenschwerpunkt (SP) des Garguts (6) hin (S11) umfassen.

5. Verfahren (S1-S14) nach Anspruch 4, bei dem ein Oberflächenschwerpunkt (SP) des Garguts (6) bestimmt wird und für die zu dem Gargut (6) gehörigen Bildpunkte (BP1, BP2, BP3) eine jeweilige Verbindungslinie zu dem Oberflächenschwerpunkt (SP) bestimmt wird und ein Bildpunkt (BP2, BP3)
- einer dritten Klasse zugerechnet wird, wenn er (BP2) sich innerhalb einer dritten vorgegebenen Winkelabweichung zu einer Verbindungslinie c(BP2) von dem Oberflächenschwerpunkt wegbewegt (S10), und
- einer vierten Klasse zugerechnet wird, wenn er (BP3) sich innerhalb einer vierten vorgegebenen Winkelabweichung zu einer Verbindungslinie c(BP3) zu dem Oberflächenschwerpunkt (SP) hinbewegt (S11).

6. Verfahren (S1-S14) nach einem der vorhergehenden Ansprüche, bei dem ein Bildpunkt (BP1, BP2, BP3) nur dann einer bestimmten Klasse zugeordnet wird, wenn seine Bewegungsgeschwindigkeit oberhalb eines vorgegebenen Schwellwerts liegt.

7. Verfahren (S1-S14) nach einem der vorhergehenden Ansprüche, bei dem die zu dem Gargut (6) gehörigen Bildpunkte (BP1, BP2, BP3) in dem Bild (B) dadurch identifiziert werden (S3), dass deren auf ein HSV-Farbkoordinatensystem bezogenen H-Werte innerhalb eines vorgegebenen Wertebereichs liegen.

8. Verfahren (S1-S14) nach einem der vorhergehenden Ansprüche, bei dem die mindestens eine das Volumen des Garguts (6) betreffende Größe mindestens eine Größe aus der Gruppe
- Volumen des Garguts (6),
- Volumenänderung des Garguts (6),
- Änderungsgeschwindigkeit des Volumens des Garguts (6)
umfasst.

9. Verfahren (S1-S14) nach einem der vorhergehenden Ansprüche, bei dem das mindestens eine vorgegebene Kriterium
- ein Erreichen eines maximalen Volumens des Garguts (6) und/oder
- ein Erreichen einer minimalen Änderung des Volumens des Garguts (6)
umfasst.

10. Verfahren (S1-S14) nach einem der vorhergehenden Ansprüche, bei dem der mindestens eine die Behandlung des Garguts (6) beeinflussende Betriebsparameter mindestens einen Betriebsparameter aus der Gruppe
- Temperatur in dem Behandlungsraum (1),
- Feuchtigkeit in dem Behandlungsraum (1)
umfasst.

11. Verfahren (S1-S14) nach den Ansprüchen 8 und 9, bei dem das Gargut (6) Teig, insbesondere Brotteig, ist und dass dann, wenn ein maximales Volumen des Teigs und/oder eine minimale Änderung des Volumens des Teigs erreicht ist (S13), eine Temperatur und/oder eine Feuchtigkeit in dem Behandlungsraum (1) reduziert wird (S14).

12. Haushaltsgargerät (2), aufweisend
- einen Behandlungsraum (1), der zum Wärmebehandeln von darin eingebrachtem Gargut (6) eingerichtet ist,
- mindestens eine Kamera (7) zum Aufnehmen von Bildern aus dem Behandlungsraum (1) und
- eine Datenverarbeitungseinrichtung (8), die dazu eingerichtet ist
- in einem Bild einer Abfolge von Bildern (B) zu dem Gargut (6) gehörige Bildpunkte (BP1, BP2, BP3) zu identifizieren,
- für folgende Bilder (B) eine Bewegungsrichtung und eine Bewegungsgeschwindigkeit der Bildpunkte (BP1, BP2, BP3) mittels der Methode des optischen Flusses, insbesondere der Methode des dichten optischen Fluss, zu berechnen,
- die Bewegungrichtungen zuvor identifizierten Bildpunkte (BP1, BP2, BP3) in Klassen für unterschiedliche Bewegungsrichtungen zu klassifizieren,
- die Zahlen der Bildpunkte (BP1, BP2, BP3), welche in die jeweiligen Klassen fallen, zu zählen,
- aus den Zahlen mindestens eine das Volumen des Garguts (6) betreffende Größe zu berechnen und
- dann, wenn die mindestens eine berechnete Größe mindestens ein vorgegebenes Kriterium erfüllt, mindestens einen die Behandlung des Garguts (6) beeinflussenden Betriebsparameter des Haushaltsgargeräts (2) zu variieren.

## Claims

1. Method (S1 - S14) for determining a volumetric variable of food (6) treated in a treatment chamber (1) of a household cooking appliance (2), in which
- images (B) are captured from the treatment chamber (1) in chronological order (S1, S5),
- in one image (B) of the image sequence, image points (BP1, BP2, BP3) belonging to the food (6) are identified (S3),
- for subsequent images (B), a movement direction and a movement speed of the image points (BP1, BP2, BP3) are calculated (S6) using the optical flow method, in particular the dense optical flow method,
- the movement directions of the previously identified image points (BP1, BP2, BP3) are classified (S8 - S11) into classes for different movement directions,
- the numbers of image points (BP1, BP2, BP3) that fall into the respective classes are counted (S8 - S11),
- from the numbers, at least one variable relating to the volume of the food (6) is calculated (S12), and
- then, if the at least one calculated variable satisfies (S13) at least one specified criterion, at least one operating parameter of the household cooking appliance (2) is varied (S14) by the household cooking appliance (2), the operating parameter influencing the treatment of the food (6).

2. Method (S1 - S14) according to claim 1, wherein the different movement directions encompass
- a movement in the direction of gravity (g) and
- a movement counter to the direction of gravity (g).

3. Method (S1 - S14) according to claim 2, wherein an image point (BP1)
- is assigned to a first class when it moves within a first specified angular deviation relative to a gravity axis (g) counter to the direction of gravity (S8) and
- is assigned to a second class when it moves within a second specified angular deviation relative to the gravity axis (g) in the direction of gravity (S9).

4. Method (S1 - S14) according to one of the preceding claims, wherein the different movement directions encompass
- a movement away from a centre of gravity of the surface (SP) of the food (6) (S10), and
- a movement toward the centre of gravity of the surface (SP) of the food (6) (S11).

5. Method (S1 - S14) according to claim 4, wherein a centre of gravity of the surface (SP) of the food (6) is determined and one respective connecting line relative to the centre of gravity of the surface (SP) is determined for the image points (BP1, BP2, BP3) belonging to the food (6), and an image point (BP2, BP3)
- is assigned to a third class when it (BP2) moves within a third specified angular deviation relative to a connecting line c(BP2) away from the centre of gravity of the surface (S10), and
- is assigned to a fourth class when it (BP3) moves within a fourth specified angular deviation relative to a connecting line c(BP3) toward the centre of gravity of the surface (SP) (S11).

6. Method (S1 - S14) according to one of the preceding claims, wherein an image point (BP1, BP2, BP3) is assigned to a specific class only when its movement speed is above a specified threshold value.

7. Method (S1 - S14) according to one of the preceding claims, wherein the image points (BP1, BP2, BP3) in the image (B) belonging to the food (6) are identified (S3) by the H-values thereof relative to an HSV colour coordinate system being located within a specified value range.

8. Method (S1 - S14) according to one of the preceding claims, wherein the at least one variable relating to the volume of the food (6) encompasses at least one variable from the group:
- volume of the food (6),
- change in volume of the food (6),
- speed of change of the volume of the food (6).

9. Method (S1 - S14) according to one of the preceding claims, wherein the at least one specified criterion encompasses
- reaching a maximum volume of the food (6) and/or
- reaching a minimum change in the volume of the food (6).

10. Method (S1 - S14) according to one of the preceding claims, wherein the at least one operating parameter influencing the treatment of the food (6) encompasses at least one operating parameter from the group:
- temperature in the treatment chamber (1),
- humidity in the treatment chamber (1).

11. Method (S1 - S14) according to claims 8 and 9, in which the food (6) is dough, in particular bread dough, and when a maximum volume of the dough and/or a minimum change in the volume of the dough is reached (S13), a temperature and/or a humidity in the treatment chamber (1) is reduced (S14).

12. Household cooking appliance (2) having
- a treatment chamber (1) which is designed for the heat treatment of food (6) introduced therein,
- at least one camera (7) for capturing images from the treatment chamber (1), and
- a data processing facility (8) which is designed
- to identify image points (BP1, BP2, BP3) belonging to the food (6) in one image of a sequence of images (B),
- to calculate for subsequent images (B) a movement direction and a movement speed of the image points (BP1, BP2, BP3) by means of the optical flow method, in particular the dense optical flow method,
- to classify the movement directions of previously identified image points (BP1, BP2, BP3) into classes for different movement directions,
- to count the numbers of image points (BP1, BP2, BP3) which fall within the respective classes,
- to calculate from the numbers at least one variable relating to the volume of the food (6) and
- then, if the at least one calculated variable satisfies at least one specified criterion, to vary at least one operating parameter of the household cooking appliance (2) influencing the treatment of the food (6).

## Revendications

1. Procédé (S1-S14) de détermination d'une variable volumique d'un aliment à cuire (6) traité dans l'espace de traitement (1) d'un appareil de cuisson électroménager (2) dans lequel,
- dans une succession chronologique, des images (B) sont prises (S1, S5) de l'espace de traitement (1),
- dans une image (B) de la série d'images des points d'image (BP1, BP2, BP3) appartenant à l'aliment à cuire (6), sont identifiés (S3),
- pour les images suivantes (B), un sens de mouvement et une vitesse de mouvement des points d'image (BP1, BP2, BP3) sont calculés (S6) au moyen de la méthode du flux optique, en particulier de la méthode du flux optique dense,
- les sens de mouvement des points d'image (BP1, BP2, BP3) précédemment identifiés sont classés (S8 - S11) dans des catégories pour différents sens de mouvement,
- les nombres des points d'image (BP1, BP2, BP3), lesquels tombent dans les catégories respectives, sont comptés (S8 - S11),
- de ces nombres, au moins une variable relative au volume de l'aliment à cuire (6), est calculée (S12) et
- quand la au moins une variable calculée, remplit (S13) au moins un critère prédéfini, l'appareil de cuisson électroménager (2) fait varier au moins un paramètre de fonctionnement de l'appareil de cuisson électroménager (2) influençant le traitement de l'aliment à cuire (6).

2. Procédé (S1-S14) selon la revendication 1, dans lequel les différents sens de mouvement comprennent
- un mouvement dans le sens de la gravité (g) et
- un mouvement dans le sens contraire de la gravité (g).

3. Procédé (S1-S14) selon la revendication 2, dans lequel un point d'image (BP1)
- est ajouté à une première catégorie, quand il se déplace contre le sens de la gravité (S8) à l'intérieur d'une première déviation angulaire prédéfinie par rapport à un axe de gravité (g) et
- est ajouté à une deuxième catégorie quand il se déplace dans le sens de la gravitation (S9) à l'intérieur d'une deuxième déviation angulaire prédéfinie par rapport à un axe de gravité (g).

4. Procédé (S1-S14) selon l'une des revendications précédentes, dans lequel les différents sens de mouvement comprennent
- un mouvement s'éloignant (S10) d'un centre de gravité superficiel (SP) de l'aliment à cuire (6) et
- un mouvement allant vers (S11) le centre de gravité superficiel (SP) de l'aliment à cuire (6).

5. Procédé (S1-S14) selon la revendication 4, dans lequel un centre de gravité superficiel (SP) de l'aliment à cuire (6) est déterminé et pour les points d'image (BP1, BP2, BP3) appartenant à l'aliment à cuire (6), une ligne de jonction respective vers le centre de gravité superficiel (SP) est déterminée et un point d'image (BP2, BP3)
- est ajouté à une troisième catégorie, quand il (BP2) se déplace en s'éloignant (S10), à l'intérieur d'une troisième déviation angulaire prédéfinie, par rapport à une ligne de jonction c(PB2), du centre de gravité superficiel, et
- est ajouté à une quatrième catégorie quand il (BP3) se déplace, à l'intérieur d'une quatrième déviation angulaire prédéfinie, par rapport à une ligne de jonction c(BP3), en s'approchant (S11), du centre de gravité superficiel (SP).

6. Procédé (S1-S14) selon l'une des revendications précédentes, dans lequel un point d'image (BP1, BP2, BP3) n'est subordonné à une catégorie déterminée que quand sa vitesse de mouvement se situe au-dessus d'une valeur de seuil prédéfinie.

7. Procédé (S1-S14) selon l'une des revendications précédentes, dans lequel les points d'image (BP1, BP2, BP3) appartenant à l'aliment à cuire (6) dans l'image (B) sont identifiés (S3) en ce que leurs valeurs H relatives à un système de coordonnées couleurs HSV se trouvent à l'intérieur d'une plage de valeurs prédéfinie.

8. Procédé (S1-S14) selon l'une des revendications précédentes, dans lequel la au moins une variable relative au volume de l'aliment à cuire (6) comprend au moins une variable du groupe suivant :
- volume de l'aliment à cuire (6),
- modification de volume de l'aliment à cuire (6),
- vitesse de modification du volume de l'aliment à cuire (6).

9. Procédé (S1-S14) selon l'une des revendications précédentes, dans lequel le au moins un critère prédéfini comprend
- la réalisation d'un volume maximal de l'aliment à cuire (6) et/ou
- la réalisation d'une modification minimale du volume de l'aliment à cuire (6).

10. Procédé (S1-S14) selon l'une des revendications précédentes, dans lequel le au moins un paramètre de fonctionnement influençant le traitement de l'aliment à cuire (6) comprend au moins un paramètre de fonctionnement du groupe suivant :
- température dans l'espace de traitement (1),
- humidité dans l'espace de traitement (1).

11. Procédé (S1-S14) selon les revendications 8 et 9, dans lequel l'aliment à cuire (6) est de la pâte, en particulier de la pâte à pain et en ce que seulement quand un volume maximal de la pâte et/ou une modification minimale du volume de la pâte est réalisé (S13), la température et/ou l'humidité dans l'espace de traitement (1) est réduite (S14).

12. Appareil de cuisson électroménager (2) comprenant
- un espace de traitement (1) lequel est configuré pour le traitement thermique d'un aliment à cuire (6) y enfourné,
- au moins une caméra (7) pour la prise d'images de l'espace de traitement (1) et
- un dispositif de traitement de données (8) configuré pour
- identifier dans une image d'une série d'images (B) des points d'image (BP1, BP2, BP3) appartenant à l'aliment à cuire (6),
- pour les images (B) suivantes, calculer un sens de mouvement et une vitesse de mouvement des points d'image (BP1, BP2, BP3) au moyen de la méthode du flux optique, en particulier de la méthode du flux optique dense,
- classer les sens de mouvement de points d'image précédemment identifiés (BP1, BP2, BP3) dans des catégories pour différents sens de mouvement,
- compter les nombres des points d'image (BP1, BP2, BP3), lesquels tombent dans les catégories respectives,
- calculer sur base de ces nombres au moins une variable relative au volume de l'aliment à cuire (6) et
- quand la au moins une variable calculée remplit au moins un critère prédéfini,
- pour faire varier au moins un paramètre de fonctionnement de l'appareil de cuisson électroménager (2) influençant le traitement de l'aliment à cuire (6).
